# EUROPÄISCHE PATENTSCHRIFT

(11) **EP 0 797 612 B1**
(45) Veröffentlichungstag und Bekanntmachung des Hinweises auf die Patenterteilung: **13.01.1999**
(21) Anmeldenummer: 95941678.5
(22) Anmeldetag: 06.12.1995
(51) Int. Cl.: C08G 77/08, C08G 77/10

(54) **VERFAHREN ZUR HERSTELLUNG VON IM WESENTLICHEN CYCLENFREIEN POLYORGANO-SILOXANEN UND ORGANOFUNKTIONELLEN SILOXANEN**
METHOD FOR PREPARING ESSENTIALLY CYCLENE-FREE POLYORGANOSILOXANES AND ORGANOFUNCTIONAL SILOXANES
PROCEDE POUR PREPARER DES POLYORGANOSILOXANES PRATIQUEMENT DEPOURVUS DE CYCLENE ET DES SILOXANES ORGANOFONCTIONNELS

(30) Priorität: 12.12.1994 DE 4444173; 12.12.1994 DE 4444174
(43) Veröffentlichungstag der Anmeldung: 01.10.1997
(73) Patentinhaber: Hüls Silicone Gesellschaft mit beschränkter Haftung, D-01610 Nünchritz (DE)
(72) Erfinder: DITTRICH, Uwe, D-01445 Radebeul (DE); RAUTSCHEK, Holger, D-01612 Nünchritz (DE); SCHICKMANN, Harald, D-01662 Mei en (DE)
(74) Vertreter: Zöllner, Gudrun
(86) Internationale Anmeldenummer: EP9504793
(87) Internationale Veröffentlichungsnummer: WO9618670

(56) Entgegenhaltungen:
- EP-A- 0 031 063
- EP-A- 0 390 083
- FR-A- 2 189 453
- GB-A- 2 279 959

## Beschreibung

### Technisches Gebiet

Die Erfindung betrifft ein Verfahren zur Herstellung von im wesentlichen cyclenfreien Polyorganosiloxanen mit monomodaler Molekulargewichtsverteilung durch Umsetzung von Organosiliciumverbindungen, welche keine kondensationsfähigen Gruppen aufweisen, in Gegenwart eines ausschließlich die Äquilibrierung fördernden und die Cyclenbildung unterdrückenden Katalysators. Die erhaltenen Polyorganosiloxane weisen eine lineare oder verzweigte Struktur auf. Sie sind entweder sofort verwendbar, beispielsweise in Siliconkautschuken und -fetten, als Komponenten in Trennmitteln, in Imprägniermitteln, in Entschäumern, usw., oder sind Ausgangsverbindungen zur Herstellung von organofunktionell modifizierten Polysiloxanen, welche durch Hydrosilylierung der Polyorganosiloxane mit Kohlenwasserstoffen und/oder organischen Polymeren erhalten werden.

### Stand der Technik

Ein gebräuchliches Verfahren zur Herstellung von Polyorganosiloxanen ist die Ringöffnungspolymersation von oligomeren cyclischen Siloxanen. Dieser Prozeß kann z. B. durch basische Katalysatoren beschleunigt werden. Beispiele dafür sind Tetramethylammoniumhydroxide (EP 492 662; Spinu, M. et al.: J. Polym. Sci. A, Polym. Chem. 29 657 (1991)), Cäsiumhydroxide (DE 26 19 187) oder Natrium- bzw. Kaliumhydroxid (US 4 122 247; Fish, D. et al.: Makromol. Chem. Macromol. Symp. 32 241 (1990)) sowie die davon abgeleiteten Silanolate und Siloxanolate. Bei diesem Prozeß verbleiben 10 bis 15 Gew.-% der cyclischen Ausgangsstoffe aufgrund des sich einstellenden thermodynamischen Gleichgewichtes im Endprodukt. Zur Herstellung von reinen Polyorganosiloxanen ist daher eine aufwendige Vakuumdestillation erforderlich, die insbesondere bei hochviskosen Produkten erhebliche technische Probleme aufwirft.

Auch bei Verwendung von sauren Katalysatoren zur Ringöffnungspolymerisation verbleiben Gleichgewichtscyclen im Produkt. Beispiele für übliche saure Katalysatoren sind saure Ionenaustauscher bzw. sauer aktivierte Bleicherden (US 4 831 174), Trifluormethansulfonsäure (Penczek, S. et al.: Adv. Polym. Sci. 68/69 216 (1986)), und Phenyldimethylsilylperchlorat (US 5 196 559). Auch wenn die Polymerisation über einen ganz anderen Mechanismus, durch Gamma-Strahlen initiiert wird (Sigwalt, P. et al.: Makromol. Chem. Macromol. Symp. 32 217 (1990)) kann aufgrund der verbleibenden Cyclen auf einen Destillationsschritt nicht verzichtet werden.

Die Lage dieses sogenannten Äquilibriergleichgewichtes ist vom verwendeten Katalysator (Kendrick, T.C. et al. in "The Chemistry of Organosilicon Compounds" ed. by S. Patai and Z. Rappaport, J. Wiley & Sons Ltd. 1989, S. 1289), der Katalysatorkonzentration und auch von der Temperatur (Penczek, S. et al.: Adv. Polym. Sci. 68/69 216 (1986)) unabhängig.

Gleichgewichtscyclen sind als unabdingbar anzusehen, ihre Bildung ist dem Fachmann bekannt (Demby, D.H.: Chem. Ind. (Dekker) 1993 43 183). Die zugrundeliegenden naturwissenschaftlichen Gesetzmäßigkeiten wurden sowohl theoretisch vom Nobelpreisträger P. Flory (J. Am. Chem. Soc. 88 3209 (1966)) als auch praktisch (Brown, J.F. et al. ibid 87 931 (1965)) untersucht.

Sollen Polyorganosiloxane hergestellt werden, welche keine flüchtigen Nebenprodukte bzw. unumgesetzten Ausgangsstoffe enthalten, dann ist die Reaktion so zu führen, daß das thermodynamische Gleichgewicht nicht erreicht, sondern die Produktzusammensetzung kinetisch kontrolliert wird.

Bekannt ist, daß die Polykondensation von hydroxyterminierten Polyorganosiloxanen kinetisch kontrolliert geführt werden kann. Typische Katalysatoren für diese Reaktion sind Alkylsulfonsäuren (EP 314 315), Trifluormethansulfonsäure (US 4 696 970), Alkaliborate (EP 382 367) und Phosphornitridhalogenide (DE 12 62 020, DE 22 29 514). Diese Verfahren setzen die Anwesenheit von kondensationsfähigen Gruppen sowie die Entfernung flüchtiger Nebenprodukte der Kondensation (z. B. Wasser) voraus. Bei ungeeigneter Verfahrensführung (zu langer Einwirkung des Katalysators) besteht aber auch hierbei die Gefahr der Bildung von cyclischen oligomeren Siloxanen (DE 12 62 020).

Auch die Polymerisation von Cyclotrisiloxanen, die aufgrund der Ringspannung stark exotherm ist, kann bei Initiierung mit basischen Lithiumverbindungen kinetisch kontrolliert werden. Wird die Polymerisation rechtzeitig vor Einstellung des Äquilibriergleichgewichtes abgebrochen, gelingt es, Polyorganosiloxane mit einem so geringem Gehalt an cyclischen Siloxanen zu erhalten, daß ein Destillationsschritt nicht mehr erforderlich ist (EP 455 163, JP 02 289 623). Hierbei ist die Wahl der Ausgangsstoffe eingeschränkt, beispielsweise erlaubt es ein basischer Katalysator nicht, Polymere mit siliciumgebundenen Wasserstoff herzustellen. Außerdem verlangt die Verfahrensführung besondere Aufmerksamkeit zur Ermittlung des Zeitpunktes des Reaktionsabbruches.

Da es sich bei diesen bekannten, kinetisch kontrollierten Prozessen um Polykondensations- bzw. Polymerisationsreaktionen handelt, bei denen jegliche Äquilibrierung unterdrückt wird, gelingt es nicht, eine gleichmäßige Molekulargewichtsverteilung und eine gleichmäßige, statistisch kontrollierte Verteilung von end- oder seitenständigen funktionellen Gruppen zu erreichen, insbesondere, wenn von Siloxanen mit verschiedenen end- und/oder seitenständigen funktionellen Gruppen oder verschiedenen Molekulargewichten ausgegangen wird. Mit den bisher bekannten Verfahren und Katalysatoren werden einheitlich aufgebaute Organosiloxane nur erhalten, wenn das Äquilibriergleichgewicht erreicht ist, und damit auch die sich gesetzmäßig bildenden oder verbleibenden Gleichgewichtscyclen vorhanden sind. Das bedeutet, daß in vielen Fällen ein zusätzlicher, kostenaufwendiger Destillationsschritt erforderlich ist, um die Cyclen zu entfernen. Die damit verbundene thermische Belastung kann für das Produkt problematisch sein, beispielsweise, wenn siliziumgebundene Wasserstoffatome oder Vinylgruppen im Polymer enthalten sein sollen, welche thermisch nicht hochbelastbar sind.

Einheitlich aufgebaute Siloxane sind für viele Anwendungen erwünscht, z. B. wenn Si-H-Gruppen in Polyorganosiloxane eingebracht werden sollen, die zu speziellen, wie beispielsweise zu polyetherfunktionellen Polyorganosiloxanen umgesetzt werden, oder wenn eine statistisch kontrollierte Verteilung von Trimethylsiloxy- und Dimethylvinylsiloxyendgruppen zur Synthese spezieller Polymere benötigt wird.

Die Synthese organofunktionell modifizierter Polysiloxane ist bekanntermaßen ein mindestens zweistufiger Prozeß. Dabei schließt sich der Herstellung eines Si-H-Bindungen enthaltenden Siloxanes im ersten Schritt, die Funktionalisierung dieses Siloxans mit den vielfältigsten organischen Resten, gewöhnlich durch Hydrosilylierung mit den entsprechenden ungesättigten, funktionellen oder nicht funktionellen, organischen Verbindungen, üblicherweise in Gegenwart von Platin oder Rhodiumverbindungen als Katalysator, an. Dieser prinzipielle Syntheseweg und die damit erhältlichen modifizierten Polysiloxane sind vielfach beschrieben worden (z. B. J. W. Adams in "Surf. Phenom. and Additives in Water-Based Coatings and Printing Technology", Plenum Press New York 1991, 73 - 82).

Der für die Struktur und damit letzendlich der Wirksamkeit der organofunktionell modifizierten Polysiloxane in den vielfältigsten Anwendungen entscheidende Schritt ist die Synthese des wasserstofffunktionellen Polysiloxans in der 1. Stufe. Verbleiben entsprechend dem Stand der Technik cyclische Siloxane im Produkt, vermindern sie dessen Wirksamkeit oder müssen durch aufwendige Vakuumdestillationen entfernt werden. Auf Grund geringer Mengen an verbleibenden Katalysatoren und damit einem kaum erreichenbaren idealen pH-Wert von 7 kommt es bei den genannten Destillationen zu Nebenreaktionen unter H₂-Abspaltung und Bildung unerwünschter Silanol-Gruppen, die über Nebenreaktionen letztendlich die Eigenschaften, das Verhalten und die Wirksamkeit der in der Folgereaktion hergestellten organofunktionell modifizierten Polysiloxane negativ beeinflussen. Unabhängig davon ist eine Destillation, beispielsweise sehr viskoser wasserstoffunktioneller Polysiloxane, äußerst problematisch.

Es war daher höchst wünschenswert, ein Verfahren zu entwickeln, welches es gestattet, Polyorganosiloxane mit einer einheitlichen Molekulargewichtsverteilung durch Äquilibrierung, in einem Schritt und im wesentlichen cyclenfrei herzustellen.

### Darstellung der Erfindung

Gegenstand der Erfindung ist ein Verfahren zur Herstellung von im wesentlichen cyclenfreien Polyorganosiloxanen mit einer monomodalen Molekulargewichtsverteilung und einer statistischen Verteilung vorhandener funktioneller Gruppen durch Äqulibrierung.

Ein weiterer Gegenstand der Erfindung ist die Herstellung von organofunktionell modifizierten Polysiloxanen, wobei die in einer ersten Stufe durch Äquilibrierung hergestellten, im wesentlichen cyclenfreien, wasserstoffunktionellen Polyorganosiloxane mit Kohlenwasserstoffen und/oder organischen Polymeren in Gegenwart eines Hydrosilylierungskatalysators umgesetzt werden.

Erfindungsgemäß werden zwei oder mehrere Organosiloxane und/oder Polyorganosiloxane der allgemeinen Formel

RₐSiO_{(4-a)/2} (I),

welche mindestens eine Siloxygruppe der allgemeinen Formel

R₃SiO_{0,5}- (M),

und mindestens eine Siloxygruppe der allgemeinen Formel

-R₂SiO- (D),

wobei R gleiche oder verschiedene, gesättigte und/oder ungesättigte, substituierte und/oder unsubstituierte, einwertige Kohlenwasserstoffreste mit 1 bis 30 Kohlenstoffatomen oder Wasserstoff bedeutet, mit der Maßgabe, daß nur ein Wasserstoff pro Silicium gebunden ist, und a ganze oder gebrochene Zahlen größer 1, vorzugsweise 1,8 bis 2,2, annimnt, in Gegenwart eines ausschließlich die Äquilibrierung fördernden und die Cyclenbildung unterdrückenden Katalysators umgesetzt.

Als ausschließlich die Äquilibrierung von linearen und/oder verzweigten Polyorganosiloxanen fördernde und die Cyclenbildung unterdrückende Katalysatoren werden bevorzugt Phosphornitrilchlorid oder dessen Umsetzungsprodukte eingesetzt.

Das verwendete Phosphornitrilchlorid besteht im wesentlichen aus Verbindungen bzw. Gemischen dieser Verbindungen der allgemeinen Formel

[Cl₃PN(PCl₂N)ₓPCl₃]⁺*[P_{y}Cl_{5y+1}]⁻ (VI),

worin x eine ganze Zahl größer/gleich 0 und y = 0 oder 1 bedeutet. Es wird beispielsweise erhalten durch Reaktion von 2 Mol Phosphorpentachlorid mit 1 Mol Ammoniumchlorid gem. US 3 839 388 und üblicherweise gelöst in Methylenchlorid eingesetzt.

Ebenfalls mit guten Ergebnissen als Katalysator einsetzbar sind Umsetzungsprodukte des Phosphornitrilchlorides, beispielsweise das Umsetzungsprodukt von Phosphornitrilchlorid mit Verbindungen der allgemeinen Formel

[R¹ ₃SiO(R¹ ₂SiO)ₙ]₃P=O (II),

worin R¹ unabhängig voneinander gleiche oder verschiedene, substituierte und/oder unsubstituierte, ungesättigte und/oder gesättigte einwertige Kohlenwasserstoffreste mit 1 bis 6 Kohlenstoffatomen oder Wasserstoff mit der Maßgabe, daß an jedem Siliciumatom nur ein Wasserstoffatom gebunden ist, bedeutet und n einen Wert zwischen 0 und 500 annimmt, wobei es möglich ist, sich während der Umsetzung bildende, leichtflüchtige, Chlor enthaltende Silicium-Verbindungen vollständig oder teilweise abzutrennen. Phosphornitrilchlorid ist mit der Verbindung der allgemeinen Formel (II) in jedem Verhältnis umsetzbar.

Es ist weiterhin möglich, das Phosphornitrilchlorid gemäß DE 42 21 854, in Säurechloriden gelöst, einzusetzen, bzw. durch Umsetzung von Phosphorpentachlorid und Ammoniumchlorid in Säurechloriden als Lösemittel herzustellen. Dabei kann ein Teil oder das gesamte Phosphornitrilchlorid auch als Umsetzungsprodukt mit dem Säurechlorid vorliegen. Die katalytische Aktivität des Phosphornitrilchlorides wird dabei nicht beeinträchtigt. Erfolgt die Herstellung in Gegenwart von Phosphoroxychlorid, entstehen durch den teilweisen Einbau des Phosphoroxychlorides auch sauerstoffhaltige Nebenprodukte, die die katalytische Wirkung ebenfalls nicht mindern, so daß auf eine aufwendige Isolierung der einzelnen Phosphornitrilchloride verzichtet werden kann.

Als weiterer ausschließlich die Äquilibrierung von linearen und/oder verzweigten Polyorganosiloxanen fördernde und die Cyclenbildung unterdrückende Katalysatoren können Verbindungen der allgemeinen Formel

R²SO₂Y (III),

wobei R² Perfluoralkyl- und/oder Perfluoralkylenreste mit 1 bis 20 Kohlenstoffatomen und Y Hydroxy-, Halogen- oder R²SO₂O-Reste bedeutet, eingesetzt. Beispielsweise kann der Rest R² in der Verbindung der allgemeinen Formel (III) ein Perfluoralkyl- und/oder Perfluoralkylenrest mit 1 bis 4 Kohlenstoffatomen sein. Bevorzugt sind Perfluoralkylsulfonsäuren sowie deren Säurehalogenide und/oder deren Säureanhydride, wie z. B. Nonafluorobutylsulfonsäure, Pentafluoroethylsulfonsäureanhydrid, das gemischte Anhydrid aus Trifluormethansulfonsäure und Heptafluoropropylsulfonsäure, Trifluormethansulfonsäurechlorid und Trifluormethansäurefluorid. Besonders bevorzugt ist die relativ leicht zugängliche Trifluormethansulfonsäure.

Es ist zur Ausführung des erfindungsgemäßen Verfahrens auch möglich, den Katalysator an einen festen Träger zu adsorbieren. Die Verbindung der allgemeinen Formel (III) kann auch chemisch gebunden sein, z. B. durch Pfropf- oder Copolymerisation einer Verbindung, in welcher der Rest R³ ungesättigt ist, mit perfluorierten Olefinen oder anderen ungesättigten Verbindungen bzw. Polymeren, und z. B. in Form einer Polymermembran verwendet werden.

Weiterhin können als Katalysatoren, welche ausschließlich die Äquilibrierung fördern und die Cyclenbildung unterdrücken, Silane und Siloxane mit Perfluoralkylsulfonsäureestergruppen eingesetzt werden. Diese sind beispielsweise herstellbar durch Umsetzung von Perfluoralkylsulfonsäuren mit cyclischen und/oder linearen Siloxanen oder durch Umsetzung von Silanolen und/oder Siloxanolen mit Perfluoralkylsulfonsäuren, Perfluoralkylsulfonsäurehalogeniden und/oder Perfluorsulfonsäureanhydriden.

Die eingesetzten Polyorganosiloxane (allgemeine Formel (I)) entsprechen bevorzugt Verbindungen der allgemeinen Formel

R₃SiO(SiR₂O)ₘSiR₃ (VII)

und bestehen im wesentlichen aus linearen, durch monofunktionelle Einheiten terminierten Polyorganosiloxanen. Diese können aber auch gewollt oder als Verunreinigung tri- und tetrafunktionelle Einheiten enthalten. Der Wert m in Formel (VII) bestimmt die Viskosität der Polyorganosiloxane, welche vorzugsweise im Bereich von 0,65 bis 5 000 000 mm²/s, vorzugsweise im Bereich von 10 bis 1 000 000 mm²/s, liegt.

Beispiele für die Reste R sind n-Alkylreste mit 1 bis 20 Kohlenstoffatomen wie z.B. Methyl- Ethyl-, Hexyl-, Cyclohexyl-; iso-Alkylreste mit 3 bis 20 Kohlenstoffatomen wie Isopropyl- und Isoamylreste; Alkylreste mit tertären Kohlenstoffatomen wie tert-Butyl- und tert-Pentyl-; ungesättigte Kohlenwasserstoffreste wie Vinyl-, Allyl-, Methacroyl- und Hexenylreste, aromatische Kohlenwasserstoffreste wie z.B: Phenyl-, Naphthyl-, Anthrylreste; Alkylarylreste, bei denen das Silicium entweder an einem aromatischem Kohlenstoffatom, wie z.B. bei Tolylresten oder an einem aliphatischem Kohlenstoffatom, wie z.B. bei Benzylresten gebunden ist; sowie substituierte Kohlenwasserstoffreste, wie z.B. Trifluorpropyl-, Cyanoethyl-, Alkoxyaryl-, Alkoxyalkyl- und Halogenarylreste. Besonders bevorzugt als Reste R sind Methyl-, Phenyl-, Vinyl- und Wasserstoffreste.

Beispiele für Verbindungen der allgemeinen Formel (I) sind weiterhin Polydimethylsiloxane mit Trimethylsiloxyendgruppen, Polydimethylsiloxane mit Dimethylvinylsiloxyendgruppen, Polydimethylsiloxane mit Dimethylhydrogensiloxyendgruppen, Polymethylhydrogensiloxane mit Trimethylsiloxyendgruppen und/oder Dimethylhydrogensiloxyendgruppen, Polyorganosiloxane mit seitenständigen und/oder endständigen ungesättigten Kohlenwasserstoffgruppen sowie Hexamethyldisiloxan bzw. Disiloxane mit Dimethylvinyl- oder Dimethylhydrogenendgruppen.

Die Umsetzung einer oder mehrerer Verbindungen der allgemeinen Formel (I) erfolgt bei Temperaturen im Bereich bis 250 °C, vorzugsweise von 10 bis 120 °C. Die erforderlichen Reaktionszeiten sind von der Temperatur und der Katalysatorkonzentration abhängig und liegen zwischen 0,5 Minuten und 20 Stunden, üblicherweise zwischen 1 Minute und 5 Stunden. Die Katalysatorkonzentration kann 0,1 bis 100 Gew.-ppm, bezogen auf das Gesamtgewicht der Ausgangsstoffe betragen. Vorzugsweise wird der Katalysator in Konzentrationen von 5 bis 20 Gew.-ppm eingesetzt.

Üblicherweise wird der Katalysator nach der Umsetzung desaktiviert und/oder abgetrennt. Die Abtrennung kann z. B. durch Abdestillation erfolgen, wenn der Katalysator, wie beispielsweise Trifluormethansulfonsäure, flüchtig ist. Eine Möglichkeit der Desaktivierung ist die Neutralisation z. B. mit Alkalihydroxiden, Alkalisilanolaten, Alkalisiloxanolaten, Lithiumalkylen, Aminen, Aminosiloxanen, Epoxiden, Vinylethern oder festen basischen Stoffen wie Alkaliphosphaten, Alkali- oder Erdalkalicarbonaten oder Magnesiumoxid. Ist der Katalysator an einen Träger fixiert, so ist eine einfache mechanische Abtrennung möglich.

Vorzugsweise werden als Verbindungen der Formel (I) niedrigviskose Polymere mit höher- bzw. hochviskosen Polymeren zu Polyorganosiloxanen mit statistisch verteilten seiten- und/oder endständigen Gruppen umgesetzt, deren mittleres Molekulargewicht zwischen denen der Ausgangsstoffe liegt. Ein Beispiel dafür ist die Herstellung von Polymeren mit einer statistisch kontrollierten Verteilung von Trimethylsiloxy- und Dimethylvinylsiloxyendgruppen aus trimethylsiloxyterminierten Polydimethylsiloxanen und dimethylvinylsiloxyterminierten Polydimethylsiloxanen. Derartige Verbindungen können zu speziellen verzweigten Siloxanen umgesetzt werden, die z. B. als Bestandteil von Siliconkautschuken, Silicongelen oder von Entschäumern verwendet werden können.

Die Anwendung des erfindungsgemäßen Verfahren kann auch dort vorteilhaft sein, wo spezielle Polymere aus Standardpolymeren hergestellt werden sollen und keine separate Anlage mit einer Destillationsmöglichkeit zur Verfügung steht. Das erfindungsgemäße Verfahren ist in einfachen Rührkesseln ohne Vakuumanschluß und ohne Destillationsvorlage mit Kühler durchführbar, da beim erfindungsgemäßen Verfahren keine flüchtigen cyclischen Siloxane entstehen, die abdestilliert werden müssen.

Das erfindungsgemäße Verfahren erlaubt natürlich auch eine kontinuierliche Arbeitsweise. Werden die beiden zu äquilibrierenden Komponenten und der Katalysator durch einen beheizbaren statischen Mischer geführt und anschließend ebenfalls in einem statischen Mischer neutralisiert, ist es möglich, in Abhängigkeit von der Art und Menge der Ausgangstoffe verschiedenste Polymere herzustellen. Außerdem ist dieser Prozeß, beispielsweise durch Einsatz eines Prozeßviskosimeters, sehr gut steuerbar, d. h., bei konstanter Viskosität hat sich das molekulare Gleichgewicht eingestellt und die Umsetzung ist beendet.

Da die als Ausgangsstoffe verwendeten Polyorganosiloxane keine kondensationsfähigen Gruppen enthalten, sind siliciumgebundene Alkoxy- oder Hydroxygruppen nur als technisch nicht vermeidbare Verunreinigung im Spurenbereich enthalten. Die Umsetzung der Verbindungen der allgemeinen Formel (I) erfolgt demnach durch reine Äquilibrierungsreaktionen, wobei eine statistische Verteilung von end- und/oder seitenständigen funktionellen Gruppen erreicht wird, ohne daß die nach der Ansicht der Fachwelt zwangsweise auftretenden cyclischen Siloxane entstehen.

Der Effekt der Unterdrückung der Cyclenbildung bei der Äquilibrierung bzw. die Suche nach geeigneten Verbindungen, welche die Äquilibrierung von unterschiedlichen Siloxanen, nicht jedoch die Cyclenbildung katalysieren, ist bisher nicht beschrieben worden. In allen zugänglichen Schriften zum Stand der Technik wird die Cyclenbildung als normale, zu akzeptierende Nebenerscheinung bei der Herstellung von Siloxanen erwähnt.

Verbindungen der allgemeinen Formel (III) sind beispielsweise als Katalysatoren für Polymerisationen von Siloxanen, immer verbunden mit der Bildung von Gleichgewichts-Cyclen, bekannt.

Phosphornitrilchlorid wird in der Literatur (W. Noll, "Chemie und Technologie der Silicone" Verlag Chemie GmbH, Weinheim/Bergstraße 1968, S. 179) als reiner Polykondensationskatalysator beschriebenen und seine Wirkungsweise nur auf silanolhaltige Siloxane beschränkt.

Es war demnach vollkommen überraschend, daß es möglich ist, die Äquilibrierung von Organosiloxanen, die keine kondensationsfähigen Gruppen enthalten, in einer Weise zu katalysieren, daß keine oligomeren cyclischen Organosiloxane gebildet werden. Es war weiterhin überraschend, daß Verbindungen aufgefunden werden konnten, die ausschließlich die Äqulibrierung, jedoch nicht die Cyclenbildung katalysieren.

Die mit dem erfindungsgemäßen Verfahren erhaltenen Polyorganosiloxane weisen eine große Einheitlichkeit hinsichtlich Molekulargewichtsverteilung und statistischer Verteilung der funktionellen Gruppen auf. Mischt man beispielsweise zwei sich in ihrer Viskosität genügend stark unterscheidende α,ω-Bis(trimethylsiloxy)polydimethylsiloxane miteinander, kann man mittels GPC (Gelpermeationschromatografie) an diesem Gemisch ein Verhältnis von Gewichts- zu Zahlenmittel des mittleren Molekulargewichtes (Dispersität oder Molekulargewichtsverteilung MWD) messen, das größer als das der Ausgangskomponenten ist. Die nach Zugabe des Katalysators beobachtete Abnahme der Dispersität über die Zeit zeigt, daß eine Äquilibrierungsreaktion abläuft. Ergebnis dessen ist eine Molekulargewichtsverteilung, wie sie auch durch herkömmliche Polymerisations/Äquilibrierungsreaktionen erreicht wird. Gegenüber dem bekannten Stand der Technik verläuft diese Äquilibrierung jedoch ohne Bildung von nennenswerten Konzentrationen an cyclischen Siloxanen.

Eine bevorzugte Variante des erfindungsgemäßen Verfahrens ist die Herstellung von Polyorganosiloxanen mit statistisch verteilten seitenständigen siliziumgebundenen Wasserstoffatomen aus trialkylsiloxyterminierten Polyorganosiloxanen und dem nichtflüchtigen Anteil des Hydrolysates aus Triorganochlorsilanen und Organodichlorsilanen. Derartige Polyorganosiloxane werden zum Beispiel als Vernetzer für additionsvernetzenden Siliconkautschuk oder als Ausgangstoff für die Herstellung spezieller organomodifizierter Polyorganosiloxane verwendet.

Organofunktionell modifizierte Polysiloxane der allgemeinen Formel

R⁴ ₓR³ ₃₋ₓSiO (R³ ₂SiO)ₙ (R⁴ _{y}R³ _{2-y}SiO)ₘ SiR⁴ _{z}R³ _{3-z} (IV),

wobei R³ gleiche und/oder verschiedene, substituierte und/oder unsubstituierte, gesättige und/oder ungesättige einwertige Kohlenwasserstoffe mit 1 bis 6 Kohlenstoffatomen, -(-R³₂SiO-)-, -(-R⁴_{y}R³_{2-y}SiO-)- und/oder -(-R⁴ₓR₃₋ₓSiO)-Gruppen, sowie R⁴ gleiche und/oder verschiedene, substituierte und/oder unsubstituierte, gesättige und/oder ungesättige, verzweigte und/oder unverzweigte Kohlenwasserstoffe und/oder organische Polymere mit 1 bis 500 Kohlenstoffatomen oder R bedeuten, n Werte von 1 bis 5000 und m Werte von 1 bis 1000 annnehmen und x, y, z entweder 0 oder 1 bedeuten, mit der Maßgabe, daß mindestens einer der Parameter x, y oder z den Wert 1 annimmt, werden erhalten
durch Umsetzung
(a) von, in einer vorgelagerten Stufe wie beschrieben hergestellten, im wesentlichen cyclenfreien Polyorganosiloxanen, welche mindestens einen siliciumgebundenen Wasserstoff enthalten, mit
(b) einem oder mehreren, Hydrosilylierungsreaktionen zugänglichen, ungesättigten, substituierten und/oder unsubstituierten, verzweigten und/oder unverzweigten Kohlenwasserstoffen und/oder organischen Polymeren mit 1 bis 500 Kohlenstoffatomen, in Gegenwart
(c) eines üblichen Hydrosilylierungskatalysators.

Die Verbindungen der allgemeinen Formeln (I), (II) und (III) sollten als ungesättigte Kohlenwasserstoffreste R, R¹ sowie R² nur solche ungesättigten Gruppen enthalten, die der Hydrosilylierungsreaktion in Gegenwart der jeweils eingesetzten Hydrosilylierungkatalysatoren nicht oder nur wenig zugänglich sind oder diese nicht durch Desaktivierung des Katalysators, beispielsweise durch Komplexbildung oder Vergiftung, behindern oder unterbinden. Zulässig sind in fast allen Fällen Arylreste, wie Phenyl-, Naphthyl-, oder Anthrylgruppen, Alkylarylreste, wie Tolyl-, Ethylphenyl- oder Mesitylgruppierungen, aber auch ungesättigte Kohlenwasserstoffgruppen, in denen die Doppel- oder Dreifachbindung durch sterische, induktive oder mesomere Effekte nicht oder nur wenig hydrosilylierbar ist. Das betrifft beispielsweise 1-Phenyl-cyclohexenylgruppen, mit sterisch anspruchsvollen Gruppen, wie tertiär Butyl- oder Isopropylfragmenten, substituierte Vinyl- oder Allylreste, aber auch z. B. durch Elektronendonatoren delokalisierte Doppelbindungen in Vinyl- oder Allylaminen.

Die eingesetzten Polyorganosiloxane (allgemeine Formel (I)) entsprechen hierbei bevorzugt der allgemeinen Formel

HₓR⁸ ₃₋ₓSiO(R⁸ ₂SiO)ₙ(H_{y}R⁸ _{2-y}O)ₘSiH_{z}R⁸ _{3-z} (VIII),

wobei R⁸ gleich oder verschieden entweder R³, -(-H_{y}R³_{2-y}SiO-)- und/oder -(-HₓR³₃₋ₓSiO-)-Gruppierungen darstellt und R³, n, m, x, y und z die in der allgemeinen Formel (IV) angegebene Bedeutung besitzen.

Vorzugsweise werden die Polyorganosiloxane der allgemeinen Formel (VIII) hergestellt durch Reaktion eines oder mehrerer wasserstoffunktioneller Polyorganosiloxane der allgemeinen Formel

HₓR⁸ ₃₋ₓSiO(H_{y}R⁸ _{2-y}SiO)ₘSiHₓR⁸ ₃₋ₓ (IX),

wobei R⁸, m, x und y die oben angegebene Bedeutung besitzen, mit einem oder mehreren Polyorganosiloxanen der allgemeinen Formel

R₃SiO(SiR₂O)ₙSiR₃ (X)

wobei R und n die oben angegebene Bedeutung besitzen, in Gegenwart eines Katalysators mit der Maßgabe, daß keine oder nur geringste Mengen an Cyclosiloxanen gebildet werden.

Beispiele für die Reste R⁸ sind n-Alkylreste mit 1 bis 20 Kohlenstoffatomen wie z.B. Methyl- Ethyl-, Hexyl-, Cyclohexyl-; iso-Alkylreste mit 3 bis 20 Kohlenstoffatomen wie Isopropyl- und Isoamylreste; Alkylreste mit tertiären Kohlenstoffatomen wie tert-Butyl- und tert-Pentyl-; aromatische Kohlenwasserstoffreste wie z.B: Phenyl-, Naphtyl-, Anthrylreste; Alkylarylreste, bei denen das Silicium entweder an einem aromatischem Kohlenstoffatom, wie z.B. bei Tolylresten oder an einem aliphatischem Kohlenstoffatom, wie z.B. bei Benzylresten gebunden ist; sowie substituierte Kohlenwasserstoffreste, wie z.B. Trifluorpropyl-, Cyanoethyl-, Alkoxyaryl-, Alkoxyalkyl- und Halogenarylreste. Besonders bevorzugt als Reste R⁸ sind Methyl-, Phenyl- und Wasserstoffreste.

Beispiele für Verbindungen der allgemeinen Formel (VIII) sind Polydimethylsiloxane mit Trimethylsiloxyendgruppen, Polydimethylsiloxane mit Dimethylhydrogensiloxyendgruppen, Polymethylhydrogensiloxane mit Trimethylsiloxyendgruppen und/oder Dimethylhydrogensiloxyendgruppen, Polydiorganosiloxane mit seitenständigen und/oder endständigen gesättigte Kohlenwasserstoffgruppen.

Als unter (b) aufgeführte Kohlenwasserstoffe und/oder Polymere werden bevorzugt Verbindungen eingesetzt, die mindestens eine olefinische Doppelbindung und/oder Dreifachbindung enthalten und/oder zur Gruppe der Carbonyl-, Carbonylanalogen und/oder heteroanalogen Carbonylverbindungen gehören. Beispielsweise enthalten die Kohlenwasserstoffe mindestens eine Vinyl- und/oder Allylgruppe und sind ausgewählt aus der Gruppe der ungesättigten Kohlenwasserstoffe und/oder der halogen-, epoxy-, ether-, alkoxy-, carboxy-, acryl-, aryl-oxy-, methacryl-, methacryloxybzw. stickstoffunktionellen Kohlenwasserstoffe. So ist es möglich, daß die unter (b) angeführten Kohlenwasserstoffe endständige aliphatische und/oder aromatische Olefine mit 3 bis 40, vorzugsweise 8 bis 25 Kohlenstoffatomen, ungesättigte Fettsäuren oder deren Derivate sind. Selbstverständlich können auch ungesättigte siliciumorganische Verbindungen, wie z. B. Methacroylpropyltrialkylsilane oder -siloxane als Verbindung (b) eingesetzt werden.

Weiterhin können die unter (b) aufgeführten Kohlenwasserstoffe und/oder Polymere, allylierte Polyether der allgemeinen Formel

CH₂=CH-CH₂-(-O-R⁵-)ₙ-(-O-R⁶)ₘOR⁷ (V)

sein, wobei R⁵ und R⁶ unabhängig voneinander, verzweigte und/oder unverzweigte Kohlenwasserstoffe mit 1 bis 6 Kohlenstoffatomen sowie R⁷ entweder R⁵, R⁶ oder Wasserstoff bedeuten und n und m die oben angegebenen Werte annehmen.

Als Hydrosilylierungskatalysator werden Metalle und/oder Verbindungen der Metalle der 8. Nebengruppe des Periodensystems der Elemente, beispielsweise Hexachloroplatinsäure, gelöst in Alkoholen, vorzugsweise in Isopropanol (Speier-Katalysator) oder in Ethanol (Lamoreaux-Katalysator) oder in protischen, unpolaren Kohlenwasserstoffen, wie Toluol, Benzol, Hexan oder Xylol, Vinylsiloxan-Platin-Komplexe (Karstedt-Katalysatoren) oder Rhodium-Komplexe, wie Rhodium-chloro-triphenylphosphin-Komplexe (Wilkinson-Katalysatoren) eingesetzt. Es ist auch möglich, den Platinkatalysator auf einem Träger fixiert, z. B. in kolloidaler Form auf Aktivkohle, zu verwenden. Unabhängig davon können als Hydrosilylierungskatalysatoren aber auch Verbindungen der Metalle Pd, Co, Ni, Ru, Cu, Ir, Fe, Mo, W, Os, Cr, Zr und Ti eingesetzt werden. Ebenso ist es möglich, zur Steuerung der Reaktionsgeschwindigkeit bekannte Inhibitoren, wie z. B. Dialkylmaleat oder Alkinole, einzubeziehen. Die verwendete Katalysatormenge beträgt 0,1 bis 100 ppm, bevorzugt 5 bis 50 ppm, bezogen auf die Summe der Mengen von (a) und (b).

Die Umsetzung der Polyorganosiloxane (a) mit den Kohlenwasserstoffen und/oder organischen Polymeren (b) in Gegenwart des Hydrosilylierungskatalysators (c) erfolgt durch Mischen von (a) und (b) und Zusatz des Katalysators. Die Reihenfolge der Zugabe ist meist nicht wesentlich. Sind die Verbindungen (a) und (b) nicht miteinander mischbar bzw. ist die Mischungsviskosität zu hoch, ist es sinnvoll, ein Lösungsmittel bzw. einen Lösungsvermittler einzusetzen. Dazu wird der unter (b) im Hauptanspruch beschriebene ungesättigte Kohlenwasserstoff gewöhnlich in einer Lösung eines aprotischen Lösemittels, wie gesättigte Kohlenwasserstoffe, Benzol, Toluol oder Xylol vorgelegt und das wasserstoffunktionelle Polyorganosiloxan der allgemeinen Formel (II) sowie der jeweilige Katalysator zugegeben. Diese Zusätze dürfen selbstverständlich den Reaktionsverlauf nicht negativ beeinflussen - bewährt haben sich dafür aromatische Kohlenwasserstoffe, wie insbesondere Toluol.

Das Verhältnis von (a) zu (b) ist abhängig vom angestrebten Produkt der allgemeine Formel (IV). Bevorzugt und um unerwünschte Nebenreaktionen auszuschließen, wird ein etwa äquimolares Verhältnis von siliciumgebundenen Wasserstoffatomen zu ungesättigten Gruppierungen gewählt. Es ist jedoch möglich, daß (a) oder (b) im Überschuß vorliegen.

Die Temperaturen während der Umsetzung betragen bis zu 200 °C, wobei Temperaturen von 20 bis 150 °C, beispielsweise von 50 bis 120 °C, bevorzugt sind. Die Reaktion führt nach ca. 1 min bis 20 h zu einem Umsetzungsgrad größer als 95 %, was an der Menge des noch basisch abspaltbaren Wasserstoffes aus verbleibenden H-Si-Gruppierungen einfach zu bestimmen ist.

Die erfindungsgemäß hergestellten organofunktionell modifizierten Polysiloxane finden vielfältige Verwendung. Weisen die organofunktionell modifizierten Polysiloxane z. B. Aminogruppen auf, können sie zur Imprägnierung von Textilien eingesetzt werden. Dazu werden bevorzugt unter Quaternierung des Aminstickstoffes mit organischen Säuren, wie z. B. Essigsäure, und bei Verwendung zusätzlicher grenzflächenaktiver Stoffe, Emulsionen bzw. Mikroemulsionen hergestellt, die nach Verdünnung und eventuellem Zusatz weiterer Komponenten (Katalysator, Vernetzer) als Imprägnierbad dienen können. Eine Anwendung in Form einer Lösung ist ebenfalls möglich.

Erfindungsgemäß hergestellte Polysiloxane, die lange Alkyl-, Alkylaryl- und/oder Polyethergruppen tragen, können als Trennmittel, Entschäumer oder Emulgatoren verwendet werden. Werkstücke, die mit solchen Polysiloxanen in Kontakt kommen, können später lackiert oder verklebt werden, ohne daß sie die typischen Silicondeffekte, wie z. B. "Fischaugen", aufweisen.

Langalkyl- bzw langalkylarylsubstituierte Polysiloxane können beispielsweise als Emulgatoren eingesetzt werden, wenn Mineralöle in Siliconölen emulgiert werden sollen. Tragen die erfindungsgemäß hergestellten Polysiloxane Polyethergruppen, eignen sie sich hervorragend als Emulgatoren für wäßrige Medien, z. B. für die Herstellung von Entschäumerdispersionen.

Ein besonders bevorzugtes Anwendungsgebiet polyethermodifizierter Polysiloxane ist die Verwendung zur Stabilisierung von Polymerschäumen. Eingesetzt werden können dazu beispielsweise Polysiloxane der allgemeinen Formel 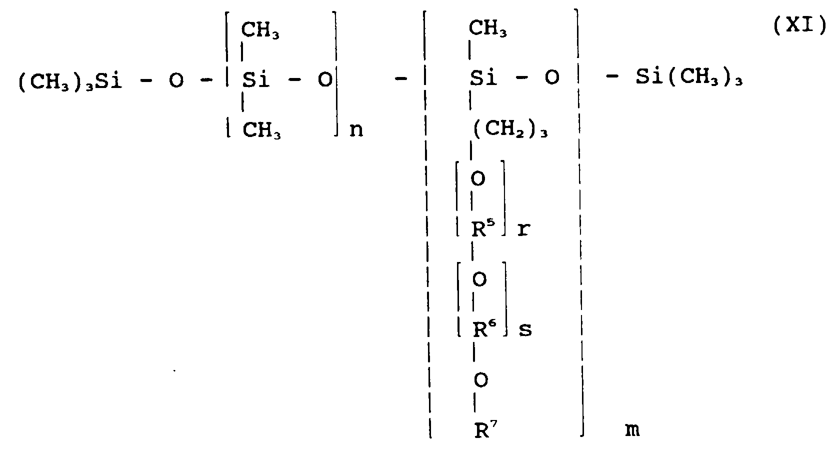 wobei R⁵, R⁶, R⁷, n und m die obengenannte Bedeutung besitzen sowie r die Werte von n und s die Werte von m annimmt. Diese Verbindungen stellen hochwirksame Stabilisatoren für Polyurethanschäume dar. Anhand der empfindlichen PUR-Hart- und -Weichschaumsysteme wird die erhöhte Wirksamkeit der erfindungsgemäß hergestellten polyethermodifizierten Polysiloxane gegenüber dem Stand der Technik ausgezeichnet demonstriert. Dazu wird die Polyolkomponente mit einer di- und/oder polyfunktionellen Isocyanatgruppe in Gegenwart von Katalysatoren und Treibmitteln sowie gegebenenfalls üblichen Antioxidantien und Flammschutzmitteln umgesetzt. Als Treibmittel können Wasser, flüchtige organische Verbindungen, wie Pentane oder auch Fluorkohlenwasserstoffe oder deren Gemische verwendet werden. Beispiele für die Polyolkomponente sind Alkylenoxidaddukte von polyfunktionellen Alkoholen, von nichtreduzierend wirkenden Kohlenhydraten (z. B. nichtreduzierend wirkende Zucker) oder von deren Derivaten, wie Glycosiden, oder von polyfunktionellen Phenolen. Aber auch niedermolekulare polyfunktionelle Alkohole, wie Glycerol oder Ethylenglycol, können verwendet werden. Durch den Einsatz von Gemischen verschiedener Polyole gelingt es, die physikalischen Eigenschaften gezielt zu beeinflussen.

### Ausführungsbeispiele

Alle Viskositätsangaben beziehen sich auf 25°C.

### Herstellung der Katalysatoren

### Phosphornitrilchlorid A

Das als Ausgangsprodukt eingesetzte Phosphornitrilchlorid A (PN-A) wurde in Anlehnung an US 3 839 388 wie folgt hergestellt: In einem 1,5 l-Sulfierkolben, ausgestattet mit Rührer, Prahl-Aufsatz, Thermometer, Tropftrichter und Intensivkühler, wurden 99,1 g 1,2,3-Trichlorpropan, 3,8 g Ammoniumchlorid und 32,8 g Phosphorpentachlorid während 30 min bei Raumtemperatur durch intensives Rühren miteinander vermischt. Unter ununterbrochenem Rühren wurde das Reaktionsgemisch zunächst 6 h lang auf 130 °C und danach weitere 6 h lang auf 150 °C erhitzt. Die bei der Reaktion entstehenden 13,7 g Chlorwasserstoff wurden in einer nachgeschalteten und mit Wasser gefüllten Waschflasche absorbiert. Nach beendeter Reaktion und Abkühlung des Reaktionsgemisches auf Raumtemperatur wurde bei einem Druck von 5 mbar und bis zu einer Sumpftemperatur von 130 °C das Lösemittel abdestilliert. Die erhaltenen 20 g Phosphornitrilchlorid entsprachen der allgemeinen Formel [Cl₃P=N(-PCl₂=N-)ₓPCl₃]⁺*[P_{y}Cl_{5y+1}]⁻, worin x eine ganze Zahl größer/gleich 0 und y = 0 oder 1 bedeutet. Zur weiteren Umsetzung konnte beliebig, z.B. mit Methylenchlorid, verdünnt werden.

### Phosphornitrilchlorid B

Das als Ausgangsprodukt eingesetzte Phosphornitrilchlorid B (PN-B) wurde in Anlehnung an DE 42 21 854 wie folgt hergestellt: 200 g Phosphorpentachlorid und 25 g Ammoniumchlorid wurden in 1 1 Phosporoxychlorid 30 h unter Feuchtigkeitsausschluß unter Rückfluß erhitzt. Anschließend wurde der in der Kälte ausgefallene Rückstand abgetrennt und die klare Lösung im Vakuum eingeengt. Es wurde eine gelbe, wachsartige Masse erhalten

### Katalysatoren I und II

Jeweils 5,6 g PN-A bzw. PN-B wurden mit 3,53 g Tris(trimethylsilyl)phosphat vermischt und 0,5 h bei einer Temperatur von 60 °C gerührt. Die Reaktionsprodukte wurden mit jeweils 1110,9 g eines Gemisches aus cyclischen Polydimethylsiloxanen, das als Hauptkomponente Octamethylcyclotetrasiloxan enthielt, vermischt. Die erhaltenen Produkte, im weiteren mit Katalysator I (hergestellt aus PN-A) und Katalysator II (hergestellt aus PN-B) bezeichnet, sind anwendungsfertige Katalysatoren, wobei die Konzentration des umgesetzten Phosphornitrilchlorides 0,5 Gew.-% beträgt.

### Herstellung der Verbindungen der allgemeinen Formel (I)

### Beispiel 1

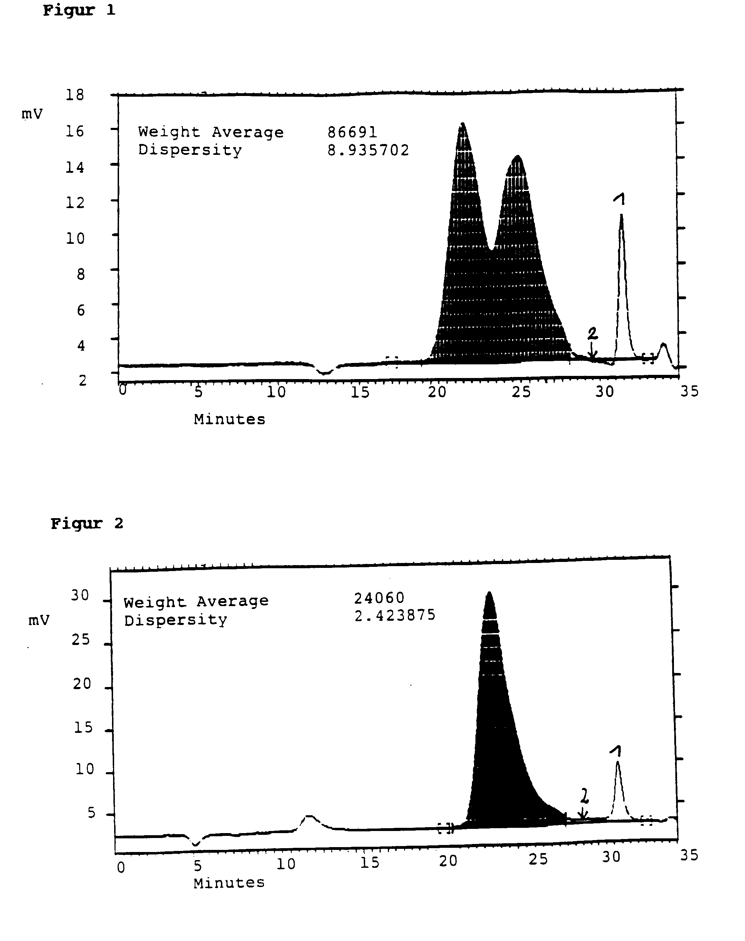

Je 100 g eines Polydimethylsiloxanes mit Trimethylsiloxyendgruppen und einer Viskosität von 100 mPas und eines Polydimethylsiloxanes mit Trimethylsiloxyendgruppen und einer Viskosität von 100 000 mPas wurden miteinander vermischt und auf 100 °C erwärmt. Nach Zugabe von 0,8 g einer 0,25 Gew.-%igen Lösung von PN-A in Methylenchlorid wurde mittels GPC die Abnahme der Dipersität (MWD) und der Gehalt an cyclischen Siloxanen untersucht. Innerhalb von 10 min nahm die Dispersität des Siloxangemisches von 8,9 (Figur 1; 1 - Standardpeak in n-Hexan, 2 - Eluationszeit für Cyclenpeak) auf 2,6 ab und blieb nach 30 min mit einem Wert von 2,4 (Figur 2; 1 und 2 s. Figur 1) konstant. Das Reaktionsprodukt wurde zur Neutralisation mit 4 mg Triisooctylamin vermischt. Der Gehalt an Cyclosiloxanen (Eluationszeit 28/29 min) betrug in der Ausgangsmischung 0,5 Gew.-% und im Reaktionsprodukt nach 30 min 0,9 Gew.-% und hatte sich damit nur unwesentlich erhöht.

### Beispiel 2

100 g einer Mischung aus 99,5 g eines Polydimethylsiloxanes mit Trimethylsiloxyendgruppen und einer Viskosität von 85 000 mPas und 0,5 g Hexamethyldisiloxan wurden auf 80 °C erwärmt und mit 0,4 g einer 0,25 Gew.-%igen Lösung von PN-B in Phosphoroxychlorid versetzt. Die Viskosität der Ausgangsmischung betrug 53 500 mPas und der Gehalt an cyclischen Siloxanen 0,6 Gew.-%. Nach 100 min wurde an dem Reaktionsprodukt, das zur Neutralisation mit 2 mg Triisooctylamin vermischt wurde, eine Viskosität von 21 000 mPas, und ein Gehalt an cyclischen Siloxanen von 0,7 Gew.-% gemessen.

### Beispiel 3

100 g einer Mischung aus 99,5 g eines Polydimethylsiloxanes mit Dimethylvinylsiloxyendgruppen und einer Viskosität von 110 000 mPas und 0,5 g Tetramethyldivinyldisiloxan wurden auf 80 °C erwärmt und mit 0,4 g des Katalysators II versetzt. Die Viskosität der Ausgangsmischung betrug 86 500 mPas und der Gehalt an cyclischen Siloxanen 0,8 Gew.-%. Nach 50 min wurde an dem Reaktionsprodukt, das zur Neutralisation mit 2 mg Triisooctylamin vermischt wurde, eine Viskosität von 15 100 mPas, und ein Gehalt an cyclischen Siloxanen von 0,9 Gew.-% gemessen.

### Beispiel 4

100 g einer Mischung aus 95 g eines Polydimethylsiloxanes mit Dimethylvinylsiloxyendgruppen und einer Viskosität von 110 000 mPas und 5 g eines Polydimethylsiloxanes mit Dimethylvinylsiloxyendgruppen, das 10 Gew.-% Dimethylvinylsiloxygruppen enthielt, wurden auf 80 °C erwärmt und mit 0,4 g einer 0,25 Gew.-%igen Lösung von PN-A in Methylenchlorid versetzt. Die Viskosität der Ausgangsmischung betrug 84 500 mPas und der Gehalt an cyclischen Siloxanen 0,9 Gew.-%. Nach 75 min wurde an dem Reaktionsprodukt, das zur Neutralisation mit 2 mg Triisooctylamin vermischt wurde, eine Viskosität von 14 000 mPas, und ein Gehalt an cyclischen Siloxanen von 1,1 Gew.-% gemessen.

### Beispiel 5

In einem statischen Mischer, der auf einer Temperatur von 100 °C gehalten wird, wurden kontinuierlich 137,5 g/h eines Polymethylhydrosiloxanes mit Trimethylsiloxyendgruppen und einer Viskosität von 32 mPas, 162,5 g/h eines Polydimethylsiloxanes mit Trimethylsiloxyendgruppen und einer Viskosität von 50 mPas und 1,2 g/h des Katalysators I miteinander vermischt. Nach einer Verweilzeit von 30 min wurde der Katalysator mit 1,2 g/h einer 1 %igen Lösung von Triisooctylamin in einem Polydimethylsiloxan mit Trimethylsiloxyendgruppen einer Viskosität von 50 mPas in einem nachgeschalteten statischen Mischer desaktiviert. Erhalten wurde ein trimethylsiloxy-endgestopptes Polyorganosiloxan, das sowohl Dimethyl- als auch Methylhydrosiloxygruppen enthielt. Die Viskosität des Polyorganosiloxanes betrug 47 mPas und sein Gehalt an cyclischen Siloxanen 1,2 Gew.-%.

### Beispiel 6

600 Teile eines Polydimethylsiloxans mit Dimethylvinylsiloxyendgruppen und einer Viskosität von 10 000 mm²/s und 200 Teile eines Polydimethylsiloxans mit Trimethylsiloxyendgruppen und einer Viskosität von 350 mm²/s wurden vermischt und nach Zugabe 20 ppm Trifluormethansulfonsäure 2h bei 70°C erwärmt und anschließend der Katalysator mit 50 ppm Trisisooctylamin neutralisiert. Mittels GPC konnte vor der Umsetzung eine uneinheitliche Molekulargewichtsverteilung (MWD = M_{w}/Mₙ = 3,9) und nach der Unsetzung eine einheitliche Molekulargewichtsverteilung (MWD = 3,1) nachgewiesen werden. Überraschenderweise war keine Zunahme an oligomeren cyclischen Siloxanen zu erkennen.

### Beispiel 6 A (Anwendungsbeispiel)

272 Teile hydrophile pyrogene Kieselsäure mit einer BET-Oberfläche von 200 g/m₂ und 1728 Teile eines Polydimethylsiloxans einer Viskosität von 200 mm²/s wurden innig verrührt und 3 mal mit einer Kolloidmühle gemahlen. Anschließend wurde die Mischung 5h auf 130°C erhitzt und erneut mit der Kolloidmühle vermahlen. 600 Teile dieser Kieselsäuredispersion, 200 Teile des entsprechend Beispiel 6 hergestellten Polyorganosiloxans, 2 Teile eines Siloxans der Formel (CH₃)₃SiO[Si(CH₃)(H)O]₄[Si(CH₃)₂O]₈Si(CH₃)₃ und 0,3 Teile 0,1-molarer Hexachloroplatinsäure in Isopropanol (Speier-Katalysator) wurden vermischt und 1 Stunde auf 70°C erhitzt, wobei die Umsetzung der siliziumgebundenen Wasserstoffatome mit den ungesättigten Kohlenwasserstoffresten erfolgte. Obwohl stöchiometrische Mengen des Siloxans mit siliziumgebundenen Wasserstoffatomen und des Siloxans mit ungesättigten Kohlenwasserstoffresten verwendet wurden, kam es zu keinem übermäßigen Viskositätsanstieg oder gar zur Gelierung des Produktes. Das beweist die statistische Verteilung der Dimethylvinylendgruppen. Das Produkt war als Entschäumer mit hervorragender Wirksamkeit einsetzbar.

### Beispiel 6 V (Vergleichsbeispiel)

Versuchsdurchführung analog Beispiel 6, jedoch wurden als Katalysator in nichterfindungsgemäßer Weise 50 g eines sauren Ionenaustauschers verwendet. Nach 8 h bei 80 °C hatten sich bereits 11 Gew.-% oligomere, cyclische Siloxane gebildet, die Molekulargewichtsverteilung war sehr breit und uneinheitlich (MWD = 3,6). Dieses Produkt konnte nicht weiterverarbeitet werden.

### Beispiel 7 bis 9

Durchführung analog Beispiel 6, jedoch wurden als Katalysator 25 ppm Trifluormethansulfochlorid (Beispiel 7), 50 ppm Nonafluorobutylsulfonsäure (Beispiel 8) bzw. 20 ppm Trifluormethansulfonsäureanhydrit (Beispiel 9) verwendet.
Es wurde jedesmal ein Polymer mit einheitlicher Molekulargewichtsverteilung aber ohne einen störenden erhöhten Cyclengehalt erhalten.

### Beispiel 11

Zu einer Mischung aus 25 Teilen des nichtflüchtigen Anteils des Hydrolysates aus Trimethylchlorsilan und Methyldichlorsilan (durchschnittliche Formel Me₃SiO[Si(Me)(H)O]₅₀SiMe₃, Me = Methyl) und 450 Teilen eines Polydimethylsiloxanes mit Trimethylsiloxyendgruppen und einer Viskosität von 50 mm²/s wurden 20 ppm Trifluormethansulfonsäure gegeben und 8 h bei 80 °C gerührt. Die Desaktivierung des Katalysators erfolgte durch Zugabe von 50 ppm Trisisooctylamin. Durch ²⁹Si-NMR konnte nachgewiesen werden, daß die Si-H-Gruppen statistisch über die Polymerkette verteilt waren.
Im GPC-Diagramm dieser Mischung war kein Peak im Bereich der cyclischen Siloxane erkennbar.

### Beispiel 12

### Herstellung eines Polyether-Polysiloxan-Blockcopolymeren sowie dessen Testung als Stabilisator für PUR-Schaum

### Stufe 1 - Herstellung des Polyorganosiloxanes der allgemeinen Formel (I)

In einem 1-l-Dreihalskolben mit Rührer, N₂-Beschleierung, Thermometer und regelbarer Heizung wurden 450 g eines trimethylsiloxyterminierten Polydimethylsiloxans einer Viskosität von 50 mPas und 63 g eines Polysiloxans mit siliciumgebundenem Wasserstoff der durchschnittlichen Formel (CH₃)₃SiO[Si(CH₃)(H)O]_{45,3}Si(CH₃)₃ (1i) innerhalb von 15 min innig vermischt und auf 65 °C erwärmt. Nach Injektion von 0,5 g eines 2 Gew.-% Phosphornitrilchlorid enthaltenden Polydimethylsiloxans wurde die Reaktion bei 65 °C durchgeführt und nach 1,5 h durch Injektion von 0,15 ml einer 10%igen Lösung von Triisooctylamin in einem Polysiloxan mit siliciumgebundenem Wasserstoff abgebrochen. Die Analyse ergab eine Viskosität von 42 mPas, einen Cyclenanteil von 1,5 Gew.-% und einen Wasserstoffanteil von 0,192 Gew.-% (H-Si). Anhand der ²⁹Si-NMR-Spektroskopie wurde das erhaltene Polyorganosiloxan mit einer durchschnittlichen Formel von (CH₃)₃SiO[Si(CH₃)(H)O]_{7,2}[Si(CH₃)₂O]₄₃Si(CH₃)₃ (1j) bestimmt und die statistische Verteilung der Methylhydrogensiloxygruppen im Polymer nachgewiesen.

### Stufe 2 - Herstellung des Polysiloxanes der allgemeinen Formel (IV)

In einem 1-1-Dreihalskolben mit Rührer, N₂-Beschleierung, Thermometer, Heizung und Rückflußkühler wurden 250 ml Toluol und 195 g eines getrockneten Allylpolyethers der durchschnittlichen Formel CH₂=CH-CH₂ -(O-CH₂-CH₂)₁₈-(0-CH₂-CH(CH₃))₁₂-O-(CH₂)₃CH₃ (1K) vorgelegt, auf 90 °C erwärmt, mit N₂ beschleiert und 58 g des in der Stufe 1 synthetisierten Polyorganosiloxans und 6 ppm Platin in Form einer 0,01-molaren Lösung von H₂PtCl₆ in Isopropanol schnell zugegeben. Die exotherme Reaktion führte zu einer Temperaturerhöhung um 10 °C und das trübe Gemisch klarte nach 60 sec. auf. Zur Vervollständigung der Reaktion wurde noch 1 h bei 105 °C nachreagiert und danach das Toluol im Vakuum abdestilliert. Das polyethermodifizierte Polysiloxan, welches der allgemeinen Formel (IX) mit R⁸ = - CH₂ - CH₂ - ; R⁶ = - CH₂ - CH(CH₃)- ; R⁷ = -(CH₂)₃CH₃ sowie n = 43, m = 7,2, r = 18 und s = 12 entsprach, wurde als klare, nur in großer Schichtdicke schwach gelb gefärbte Flüssigkeit einer Viskosität von 760 mPas erhalten. Die Analyse auf H-Si-Gruppen ergab einen Umsetzungsgrad von 98,5 %.

### Beispiele 12 V (Vergleichsbeispiel)

Entprechend Stand der Technik wurde das Polyorganosiloxan der durchschnittlichen Formel (1j) durch 20-stündige Äquilibrierung eines Gemisches aus 842,6 g Polydimethylcyclosiloxanen, 121,2 g des wasserstoffunktionellen Polysiloxans der Formel (1i) und 36,2 g Hexamethyldisiloxan in Gegenwart von 3 Gew.-% eines handelsüblichen sulfonsauren Ionenaustauschers hergestellt. Nach Filtration von dem verwendeten Katalysator wurde das erhaltene wasserstoffunktionelle Polyorganosiloxan (Wasserstoffanteil: 0,191 Gew.-% (H-Si); Viskosität: 38 mPas, Cyclengehalt: 12 Gew.-%) im Vakuum destilliert und für die nächste Stufe eingesetzt. Die Addition des Allylpolyethers der Formel (1k), durchgeführt analog Beispiel 1, Stufe 2 führte zu Produkt la (Umsetzungsgrad: 98 %; Viskosität: 910 mPas).

### Testung der Polysiloxane Schaumstabilisatoren

Getestet wurden die gemäß Beispiel 12 und 12 V hergestellten polyethermodifizierten Polysiloxane auf ihre Wirksamkeit hinsichtlich Steighöhe und Zelligkeit in einem kommerziellen, 141b (HFKW)-getriebenen Hartschaumsystem und hinsichtlich Steighöhe und Luftdurchlässigkeit in einem kommerziellen, CO₂-getriebenen Weichschaumsystem.

Die Ergebnisse sind in Tabelle 1 dargestellt.

**Tabelle 1**

| | erfindungsgemäßes Produkt entsprechend Beispiel 12 | nicht erfindungsgemäßes Produkt Beispiel 12 V |
|---|---|---|
| Hartschaumsystem | | |
| Teile polyethermodifiziertes Polysiloxan auf 100 Teile Polyol | 1,5 | 1,5 |
| Verschäumungstemperatur (°C) | 40 | 40 |
| Fließlänge des Schaumkörpers (cm) (Lanzentest) | 158 | 156 |
| Zelligkeit | feinporig, gleichmäßige Form | feinporig, wenig gleichmäßige Form |

| Weichschaumtest | | |
|---|---|---|
| Raumgewicht des Systems (kg/m³) | 30 | 30 |
| Teile polyethermodifiziertes Polysiloxan auf 100 Teile Polyol | 0,3 | 0,3 |
| relative Höhe ¹⁾ (%) | 101 | 99 |
| relative Luftdurchlässigkeit ¹⁾ (%) | 100 | 90 |

| | | |
|---|---|---|
| ¹⁾ gegen 0,9 Teile eines Vergleichsstabilisators anerkannter Qualität | | |

Das erfindungsgemäß hergestellte polyethermodifizierte Polyosiloxan entsprechend Beispiel 12 zeigte in der Anwendung als Schaumstabilisator bei analoger Grundstruktur sowohl in dem verwendeten Hartschaumsystem, als auch in den kommerziellen Weichschaumsystem Vorteile gegenüber dem nicht erfindungsgemäß, aus destilliertem H-Polysiloxan hergestellten Produkt 12 V.

### Beispiel 13 bis 16

### Herstellung verschieden modifizierter Polysiloxane

Verwendet wurde das entsprechend Beispiel 1 hergestellte wasserstoffunktionelle Polysiloxan (lj).
Mit verschiedenen ungesättigten funktionellen Kohlenwasserstoffen wurden in Gegenwart verschiedener üblicher Hydrosilylierungskatalysatoren organomodifizierte Polysiloxane gemäß Tabelle 2 hergestellt.
Die Reaktionen verliefen in guten Ausbeuten und gaben klare bis schwach gelb gefärbte Produkte.

**Tabelle 2**

| Bsp Nr. | Kohlenwasserstoff [g] | Katalysator [ppm] | Siloxan (7j) [g] | Rkt.- zeit [h] | Rkt.- temp. [°C] | Produkt- visk. [mPas] | Umsetzungsgrad [%] |
|---|---|---|---|---|---|---|---|
| 13 | CH₂=CH-CH₂-NO₂ [20] | H₂PtCl₆ [50] | 100 | 6 | 80 | 61 | 92 |
| 14 | CH₂=CHOCOCH₃ [20] | H₂PtCl₆ [50] | 100 | 10 | 90 | 71 | 90 |
| 15 | (CH₃)₂C=CHCOCH₃ [20] | Rh(PPh₃)Cl [200] | 100 | 10 | 80 | 74 | 98 |
| 16 | 2-Propargyloxyethylacrylat [35] | PtCl₄ (1-Octen) [50] | 100 | 3 | 110 | 81 | 97 |

## Patentansprüche

1. Verfahren zur Herstellung von im wesentlichen cyclenfreien Polyorganosiloxanen mit einer monomodalen Molekulargewichtsverteilung, dadurch gekennzeichnet, daß zwei oder mehrere Organosiloxane und/oder Polyorganosiloxane der allgemeinen Formel
RₐSiO_{(4-a)/2} (I),
welche mindestens eine Siloxygruppe der allgemeinen Formel
R₃SiO_{0,5}- (M),
und mindestens eine Siloxygruppe der allgemeinen Formel
-R₂SiO- (D),
wobei R gleiche oder verschiedene, gesättigte und/oder ungesättigte, substituierte und/oder unsubstituierte, einwertige Kohlenwasserstoffreste mit 1 bis 30 Kohlenstoffatomen oder Wasserstoff bedeutet, mit der Maßgabe, daß nur ein Wasserstoff pro Silicium gebunden ist, und a ganze oder gebrochene Zahlen größer 1 annimmt, in Gegenwart eines ausschließlich die Äquilibrierung fördernden und die Cyclenbildung unterdrückenden Katalysators umgesetzt werden.

2. Verfahren nach Anspruch 1, dadurch gekennzeichnet, daß als Katalysator Phosphornitrilchlorid oder dessen Umsetzungsprodukte eingesetzt werden.

3. Verfahren nach Anspruch 2, dadurch gekennzeichnet, daß als Katalysator ein Umsetzungsprodukt von Phosphornitrilchlorid mit Verbindungen der allgemeinen Formel
[R¹ ₃SiO(R¹ ₂SiO)ₙ]₃P=O (II),
worin R¹ unabhängig voneinander gleiche oder verschiedene, substituierte und/oder unsubstituierte, ungesättigte und/oder gesättigte einwertige Kohlenwasserstoffreste mit 1 bis 6 Kohlenstoffatomen oder Wasserstoff mit der Maßgabe, daß an jedem Siliciumatom nur ein Wasserstoffatom gebunden ist, bedeutet und n einen Wert zwischen 0 und 500 annimmt, eingesetzt wird.

4. Verfahren nach Anspruch 1, dadurch gekennzeichnet, daß als Katalysator Verbindungen der allgemeinen Formel
R²SO₂Y (III),
wobei R² Perfluoralkyl- und/oder Perfluoralkylenreste mit 1 bis 20 Kohlenstoffatomen und Y Hydroxy-, Halogen-, R²SO₂O-, Silan- oder Siloxanreste bedeuten, eingesetzt werden.

5. Verfahren nach Anspruch 4, dadurch gekennzeichnet, daß der Rest R² in der Verbindung der allgemeinen Formel (III) ein Perfluoralkyl- und/oder Perfluoralkylenrest mit 1 bis 4 Kohlenstoffatomen, ist.

6. Verfahren nach Anspruch 4, dadurch gekennzeichnet, daß als Verbindung der allgemeinen Formel (III) Trifluormethansulfonsäure verwendet wird.

7. Verfahren nach Anspruch 1, dadurch gekennzeichnet, daß der Katalysator in Mengen von 0,1 bis 100 Gew.-ppm, bezogen auf das Gesamtgewicht der Ausgangsstoffe, eingesetzt wird.

8. Verfahren nach Anspruch 7, dadurch gekennzeichnet, daß der Katalysator in Mengen von 5 bis 20 Gew.-ppm, bezogen auf das Gesamtgewicht der Ausgangsstoffe, eingesetzt wird.

9. Verfahren nach Anspruch 1, dadurch gekennzeichnet, daß der Katalysator nach der Umsetzung desaktiviert und/oder abgetrennt wird.

10. Verfahren nach Anspruch 1, dadurch gekennzeichnet, daß in der allgemeinen Formel (I) a einen Wert von 1,8 bis 2,2 annimmt.

11. Verfahren nach Anspruch 1, dadurch gekennzeichnet, daß keine Zugabe von Wasser oder organischen Lösemitteln erfolgt.

12. Anwendung des Verfahrens gemäß Anspruch 1 zur Herstellung von im wesentlichen cyclenfreien, organofunktionell modifizierten Polysiloxanen der allgemeinen Formel
R⁴ ₓR³ ₃₋ₓSiO (R³ ₂SiO)ₙ (R⁴ _{y}R³ _{2-y}SiO)ₘ SiR⁴ _{z}R³ _{3-z} (I),
wobei R³ gleiche und/oder verschiedene, substituierte und/oder unsubstituierte, gesättige und/oder ungesättige einwertige Kohlenwasserstoffe mit 1 bis 6 Kohlenstoffatomen, -(-R³₂SiO-)-, -(-R⁴_{y}R³_{2-y}SiO-)- und/oder -(-R⁴ₓR³₃₋ₓSiO)-Gruppen, sowie R⁴ gleiche und/oder verschiedene, substituierte und/oder unsubstituierte, gesättige und/oder ungesättige, verzweigte und/oder unverzweigte Kohlenwasserstoffe und/oder organische Polymere mit 1 bis 500 Kohlenstoffatomen oder R bedeuten, n Werte von 1 bis 5000 und m Werte von 1 bis 1000 annnehmen und x, y, z entweder 0 oder 1 bedeuten, mit der Maßgabe, daß mindestens einer der Parameter x, y oder z den Wert 1 annimmt,
durch Umsetzung von
(a) gemäß Anspruch 1 hergestellten Polyorganosiloxanen, welche mindestens einen siliciumgebundenen Wasserstoff enthalten, mit
(b) einem oder mehreren, Hydrosilylierungsreaktionen zugänglichen, ungesättigten, substituierten und/oder unsubstituierten, verzweigten und/oder unverzweigten Kohlenwasserstoffen und/oder organischen Polymeren mit 1 bis 500 Kohlenstoffatomen, in Gegenwart
(c) eines üblichen Hydrosilylierungskatalysators.

13. Verfahren nach Anspruch 12, dadurch gekennzeichnet, daß die unter (b) aufgeführten Kohlenwasserstoffe und/oder Polymere mindestens eine olefinische Doppelbindung und/oder Dreifachbindung enthalten und/oder zur Gruppe der Carbonyl-, Carbonylanalogen und/oder heteroanalogen Carbonylverbindungen gehören.

14. Verfahren nach Anspruch 13, dadurch gekennzeichnet, daß die unter (b) aufgeführten Kohlenwasserstoffe und/oder Polymere mindestens eine Vinyl- und/oder Allylgruppe enthalten und ausgewählt sind aus der Gruppe der ungesättigten Kohlenwasserstoffe und/oder der halogen-, epoxy-, ether-, alkoxy-, carboxy-, acryl-, aryloxy-, methacryl-, methacryloxy- bzw. stickstoffunktionellen Kohlenwasserstoffe.

15. Verfahren nach Anspruch 13, dadurch gekennzeichnet, daß die unter (b) aufgeführten Kohlenwasserstoffe und/oder Polymere, allylierte Polyether der allgemeinen Formel
CH₂ = CH-CH₂-(-O-R⁵-)ₙ-(-O-R⁶)ₘOR⁷ (V)
sind, wobei R⁵ und R⁶ unabhängig voneinander, verzweigte und/oder unverzweigte Kohlenwasserstoffe mit 1 bis 6 Kohlenstoffatomen sowie R⁷ entweder R⁵, R⁶ oder Wasserstoff bedeuten und n und m die oben angegebenen Werte annehmen.

16. Verfahren nach Anspruch 12, dadurch gekennzeichnet, daß als Hydrosilylierungskatalysator Metalle und/oder Verbindungen der Metalle der 8. Nebengruppe des Periodensystems der Elemente eingesetzt werden.

17. Verfahren nach Anspruch 16, dadurch gekennzeichnet, daß als Hydrosilylierungskatalysator Hexachloroplatinsäure, gelöst in Alkoholen, vorzugsweise Isopropanol, eingesetzt wird.

18. Verfahren nach Anspruch 16, dadurch gekennzeichnet, daß als Hydrosilylierungskatalysator Vinylsiloxan-Platin-Komplexe eingesetzt werden.

19. Verfahren nach Anspruch 16, dadurch gekennzeichnet, daß als Hydrosilylierungskatalysator Rhodiumkomplexe eingesetzt werden.

## Claims

1. A process for producing polyorganosiloxanes virtually free from cyclic components and with a monomodal molecular weight distribution, characterized in that two or more organosiloxanes and/or polyorganosiloxanes of the general formula
RₐSiO_{(4-a)/2} (I),
which contain at least one siloxy group of the general formula
R₃SiO_{0.5}- (M)
and at least one siloxy group of the general formula
R₂SiO- (D),
are converted in the presence of a catalyst that uniquely promotes equilibrium and suppresses the formation of cyclic components, in which case R denotes identical or different, saturated and/or non-saturated, substituted and/or unsubstituted monovalent hydrocarbon radicals that each have 1 to 30 carbon atoms or hydrogen, provided that only one hydrogen per silicon is bonded and subscript a denotes whole or fractional numbers greater than 1.

2. A process as claimed in claim 1, characterized in that phosphonitrile chloride or its reaction products are used as a catalyst.

3. A process as claimed in claim 2, characterized in that a reaction product of phosphonitrile chloride with compounds of the general formula
[R¹ ₃SiO(R¹ ₂SiO)ₙ]₃P=O (II)
is used,
where R¹ denotes identical or different, substituted and/or unsubstituted, unsaturated and/or saturated monovalent hydrocarbon radicals that are independent of one another and have 1 to 6 carbon atoms or hydrogen, provided that only one hydrogen atom is bonded to each silicon atom, and where n has a value between 0 and 500.

4. A process as claimed in claim 1, characterized in that compounds of the general formula
R²SO₂Y (III)
are used as a catalyst, in which case R² denotes perfluoroalkyl and/or perfluoroalkylene radicals that have 1 to 20 carbon atoms and Y denotes hydroxy, halogen, R²SO₂O, silane, or siloxane radicals.

5. A process as claimed in claim 4, characterized in that the radical R² in the compound of the general formula (III) is a perfluoroalkyl and/or perfluoroalkylene radical having 1 to 4 carbon atoms.

6. A process as claimed in claim 4, characterized in that trifluoromethansulfonic acid is used as a compound of the general formula (III).

7. A process as claimed in claim 1, characterized in that the catalyst is used in amounts of 0.1 to 100 p.p.m. by weight in relation to the total weight of the starting materials.

8. A process as claimed in claim 7, characterized in that the catalyst is used in amounts of 5 to 20 p.p.m. by weight in relation to the total weight of the starting materials.

9. A process as claimed in claim 1, characterized in that the catalyst is deactivated and/or separated after the conversion.

10. A process as claimed in claim 1, characterized in that subscript a in the general formula (I) has a value between 1.8 and 2.2.

11. A process as claimed in claim 1, characterized in that neither water nor organic solvent is added.

12. The application of the process in accordance with claim 1 for the production of organofunctionally modified polysiloxanes free from cyclic components and of the general formula
R⁴ ₓR³ ₃₋ₓSiO(R³ ₂SiO)ₙ (R⁴ _{y}R³ _{2-y}SiO)ₘSiR⁴ _{z}R³ _{3-z} (I),
in which case R³ denotes identical and/or different, substituted and/or unsubstituted, saturated and/or unsaturated monovalent hydrocarbons having 1 to 6 carbon atoms, -(-R³₂SiO-), -(-R⁴_{y}R³_{2-y}SiO-)- and/or -(-R⁴ₓR³₃₋ₓSiO) groups, and R⁴ denotes identical and/or different, substituted and/or unsubstituted, saturated and/or unsaturated, branched and/or unbranched hydrocarbons and/or organic polymers having 1 to 500 carbon atoms or R, n has values from 1 to 5,000, m has values from 1 to 1,000, and x,y,z has a value of either 0 or 1, provided that at least one of the parameters x, y, or z has the value 1 by means of the conversion of
a) polyorganosiloxanes produced in accordance with claim 1, which contain at least one silicon-bonded hydrogen with
b) one or more hydrosilylation reaction-accessible, unsaturated, substituted and/or unsubstituted, branched and/or non-branched hydrocarbons and/or organic polymers having 1 to 500 carbon atoms in the presence of
c) a typical hydrosilylation catalyst.

13. A process as claimed in claim 12, characterized in that the hydrocarbons and/or polymers mentioned in (b) contain at least one olefinic double bond and/or triple bond and/or belong to the group of carbonyl, carbonyl-analogous, and/or hetero-analogous carbonyl compounds.

14. A process as claimed in claim 13, characterized in that the hydrocarbons and/or polymers mentioned in (b) contain at least one vinyl and/or an allyl group and are selected from the group of unsaturated hydrocarbons and/or halogen, epoxy, ether, alkoxy, carboxy, acrylic, aryloxy, methacryl, methacryloxy or nitrogen-functional hydrocarbons.

15. A process as claimed in claim 13, characterized in that the hydrocarbons and/or polymers mentioned in (b) are allylated polyethers of the general formula
CH₂ = CH-CH₂-(-O-R⁵-)ₙ-(-O-R⁶)ₘOR⁷ (V)
in which case R⁵ and R⁶ denote hydrocarbons that are independent of each other, are branched and/or unbranched, and have 1 to 6 carbon atoms, while R⁷ denotes either R⁵, R⁶ or hydrogen, and n and m have the above-mentioned values.

16. A process as claimed in claim 12, characterized in that metals and/or compounds of metals of the 8th auxiliary group of the periodic table of elements are used.

17. A process as claimed in claim 16, characterized in that hexachloroplatinic acid, dissolved in alcohol, or preferably isopropanol, is used as an hydrosilylation catalyst.

18. A process as claimed in claim 16, characterized in that vinyl siloxane platinum complexes are used as an hydrosilylation catalyst.

19. A process as claimed in claim 16, characterized in that rhodium complexes are used as an hydrosilylation catalyst.

## Revendications

1. Procédé pour la fabrication de polyorganosiloxanes en grande partie sans composants cycliques avec une répartition du poids moléculaire monomodale, caractérisé en ce que deux ou plusieurs organosiloxanes et/ou polyorganosiloxanes de la formule générale
RₐSiO_{(4-a)/2} (I)
lesquels contiennent au moins un groupe de siloxy de la formule générale
R₃SiO_{0,5}- (M)
et au moins un groupe de siloxy de la formule générale
-R₂SiO- (D)
où R représente des radicaux d'hydrocarbures monovalents semblables ou différents, saturés et/ou insaturés, substitués et/ou non-substitués, avec 1 à 30 atomes de carbone ou d'hydrogène, sous réserve qu'un seul hydrogène est lié par silicium, et a prend comme valeur des nombres entiers ou décimaux supérieurs à 1, sont transformés en présence d'un catalyseur favorisant exclusivement l'équilibration et empêchant la formation de composants cycliques.

2. Procédé selon la revendication 1, caractérisé en ce que du chlorure phosphonitrilique ou ses produits de transformation sont utilisés en tant que catalyseur.

3. Procédé selon la revendication 2, caractérisé en ce qu'un produit de transformation du chlorure phosphonitrilique est utilisé en tant que catalyseur avec composés de la formule générale
[R¹ ₃SiO(R¹ ₂SiO)ₙ]₃P=O (II)
où R¹ représente des radicaux d'hydrocarbures monovalents, indépendants les uns des autres, semblables ou différents, substitués et/ou non-substitués, saturés et/ou insaturés, avec 1 à 6 atomes de carbone ou d'hydrogène, sous réserve qu'à chaque atome de silicium n'est lié qu'un atome d'hydrogène et n prend une valeur entre 0 et 500.

4. Procédé selon la revendication 1, caractérisé en ce qu'il est utilisé en tant que catalyseur des composés de la formule générale
R²SO₂Y (III),
où R² représente de l'alkyle perfluorique et/ou des radicaux d'alkylène perfluorique avec 1 à 20 atomes de carbone, et Y des radicaux d'hydroxyde, d'halogène, R²SO₂O, de silane ou de siloxane.

5. Procédé selon la revendication 4, caractérisé en ce que le radical R² dans le composé de la formule générale (III) est un radical d'alkyle perfluorique et/ou d'alkylène perfluorique avec 1 à 4 atomes de carbone.

6. Procédé selon la revendication 4, caractérisé en ce que de l'acide sulfonique trifluorométane est utilisé en tant que composé de la formule générale (III).

7. Procédé selon la revendication 1, caractérisé en ce que, le catalyseur est utilisé dans des quantités allant de 0,1 à 100 ppm pondéral rapporté au poids total du produit de départ.

8. Procédé selon la revendication 7, caractérisé en ce que, le catalyseur est utilisé dans des quantités allant de 5 à 20 ppm pondéral rapporté au poids total du produit de départ.

9. Procédé selon la revendication 1, caractérisé en ce que, le catalyseur est désactivé et/ou séparé après la transformation.

10. Procédé selon la revendication 1, caractérisé en ce que dans la formule générale (I) a prend une valeur allant de 1,8 à 2,2

11. Procédé selon la revendication 1, caractérisé en ce qu'il n'y a pas de rajout d'eau ou de solvant organique.

12. Application du procédé selon la revendication 1 pour la fabrication essentielle de polysiloxanes sans composants cycliques - modifiés dans leur fonction organique, de la formule générale
R⁴ ₓR³ ₃₋ₓSiO(R³ ₂SiO)ₙ (R⁴ _{y} R³ _{2-y}SiO)ₘ SiR⁴ _{z} R³_{3-z} (I),
où R³ représente des hydrocarbures semblables et/ou différents, substitués et/ou non-substitués, saturés et/ou insaturés, monovalents avec 1 à 6 atomes de carbone, des groupes -(-R³₂SiO-)-, -(-R⁴_{y} R³_{2-y}SiO-)- et/ou -(-R⁴ₓR³₃₋ₓSiO-)- et R⁴ des hydrocarbures et/ou polymères organiques semblables et/ou différents, substitués et/ou non-substitués, saturés et/ou insaturés, ramifiés et/ou non-ramifiés avec 1 à 500 atomes de carbone ou R, n accepte des valeurs de 1 à 5000 et m des valeurs de 1 à 1000 et x, y, z nt 0 ou 1 sous réserve qu'au moins un des paramètres x, y ou z prend la valeur 1,
en transformant
(a) des polyorganosiloxanes produits selon la revendication 1, comprenant au moins un hydrogène lié au silicium, avec
(b) un ou plusieurs hydrocarbures et/ou polymères organiques favorables à la réaction hydrosilylique, insaturés, substitués et/ou non-substitués, ramifiés et/ou non-ramifiés avec 1 à 500 atomes de carbone, en présence
(c) d'un catalyseur hydrosilylique habituel.

13. Procédé selon la revendication 12, caractérisé en ce que les hydrocarbures et/ou polymères énoncés sous (b) comprennent au moins une liaison oléfinique double et/ou triple et/ou appartiennent au groupe des composants carbonyles, carbonyles analogiques et/ou hétéro-analogiques.

14. Procédé selon la revendication 13, caractérisé en ce que les hydrocarbures et/ou polymères énoncés sous (b) comprennent au moins un groupe vinyle et/ou allyle et sont sélectionnés dans le groupe des hydrocarbures insaturés et/ou des d'halogènes, d'époxy, d'éther, d'alkoxy, de carboxy, d'acryle, d'aryloxy, de méthacryle, de méthacryloxy et d'hydrocarbures faisant fonction d'azote.

15. Procédé selon la revendication 13, caractérisé en ce que les hydrocarbures et/ou polymères énoncés sous (b) sont des polyethers allyliques de la formule générale
CH₂ = CH-CH₂-(-O-R⁵-)ₙ-(-O-R⁶)ₘOR⁷ (V),
où R⁵ et R⁶ représentent des hydrocarbures indépendants les uns des autres, ramifiés et/ou non-ramifiés avec 1 à 6 atomes de carbone, et R⁷ représente R⁵, R⁶ ou de l'hydrogène, et n et m prennent les valeurs énoncées ci-dessus.

16. Procédé selon la revendication 12, caractérisé en ce que des métaux et/ou composants de métaux du groupe secondaire de la classification périodique des éléments sont utilisés en tant que catalyseurs hydrosilyliques.

17. Procédé selon la revendication 16, caractérisé en ce que de l'acide hexacholoplatinique dissout dans des alcools, de préférence dans l'isopropanol, est utilisé en tant que catalyseur hydrosilylique.

18. Procédé selon la revendication 16, caractérisé en ce que des complexes vinylsiloxan de platine sont utilisés en tant que catalyseurs hydrosilyliques.

19. Procédé selon la revendication 16, caractérisé en ce que des complexes de rhodium sont utilisés en tant que catalyseurs hydrosilyliques.
